# EUROPÄISCHE PATENTANMELDUNG

(11) **EP 0 828 165 A2**
(43) Veröffentlichungstag der Anmeldung: **11.03.1998**
(21) Anmeldenummer: 97115421.6
(22) Anmeldetag: 05.09.1997
(51) Int. Cl.: G01S 17/08

(54) **Vorrichtung und Verfahren zur Bestimmung und Weiterverarbeitung von Aufmassen**

(30) Priorität: 06.09.1996 DE 29615514 U
(71) Anmelder: Greiler, Martin A., 84180 Loiching-Kronwieden (DE)
(72) Erfinder: Greiler, Martin A., 84180 Loiching-Kronwieden (DE); Opitz, Dieter, 84180 Loiching-Kronwieden (DE)
(74) Vertreter: Riederer Freiherr von Paar zu Schönau, Anton

(57) **Zusammenfassung**

Eine Vorrichtung zur Bestimmung und Weiterverarbeitung von Aufmaßen umfaßt ein elektronisches Abstandsmeßgerät auf der Basis einer Messung mit Hilfe eines optischen Meßstrahls, mit einem Sender für den Meßstrahl (2) und einem Empfänger für einen zurückkehrenden reflektierten Strahl (3) sowie einer Auswerteinrichtung zur Ermittlung des Abstands zum Reflexionsort (4) aus einem Vergleich physikalischer Größen des gesendeten Meßstrahls und des empfangenen Strahls, und einen Rechner (26) zum Steuern der Messung, sowie Erfassen und Weiterverarbeiten der Meßwerte, wobei die Vorrichtung einen Speicher zum Speichern einer Vielzahl geometrischer Grundformen aufweist, die Vorrichtung ein Anzeigemittel zur Anzeige und Auswahl der zu messenden geometrischen Grundform aus einer Vielzahl von vorgegebenen geometrischen Grundformen aufweist, die Abstandsmeßwerte entsprechend der ausgewählten geometrischen Grundform ermittelt werden, und der Rechner (26) entsprechend der ausgewählten geometrischen Grundform die Abstandswerte miteinander zu einem Aufmaß verknüpft und die ermittelten Meßwerte und das errechnete Aufmaß auf dem Anzeigemittel ausgibt.

Ein entsprechendes Verfahren zur Bestimmung und Weiterverarbeitung von Aufmaßen, das in der obigen Vorrichtung eingesetzt wird, wird beschrieben

## Beschreibung

Die Erfindung bezieht sich auf eine Vorrichtung und ein Verfahren zur Bestimmung und Weiterverarbeitung von Aufmaßen mit einem elektronischen Abstandsmeßgerät auf der Basis einer Messung mit Hilfe eines optischen Meßstrahls, mit einem Sender für den Meßstrahl und einem Empfänger für einen zurückkehrenden reflektierten Strahl sowie einer Auswerteinrichtung zur Ermittlung des Abstands zum Reflexionsort aus einem Vergleich physikalischer Größen des gesendeten Meßstrahls und des empfangenen Strahls, und einem Rechner zum Steuern des Messens, sowie Erfassen und Weiterverarbeiten der Meßwerte.

Insbesondere im Bauwesen, jedoch auch bei verschiedenen anderen Erfassungen müssen die Längenmaße von Innenräumen und auch Außenmaße gemessen werden, beispielsweise zum Zwecke der Kalkulation, für die Abnahme oder zur Berechnung erforderlicher Bodenbeläge, Putzmengen usw. Die dabei ermittelten Maße werden als Aufmaße bezeichnet. Das althergebrachte Verfahren hierzu ist die mechanische Vermessung, beispielsweise mit Hilfe von Maßbändern oder Meßstöcken.

Eine Vorrichtung der eingangs genannten Art ist von der Firma Leica als Hand-Lasermeter "Disto" bekannt. Dieses bekannte Abstandsmeßgerät arbeitet auf der Basis eines Phasenvergleichs eines gesendeten und eines reflektierten empfangenen Laserstrahls. Bei Innenmaßen erfolgt die Reflexion beispielsweise an einer gegenüberliegenden Wand, bei Außenmaßen kann ein zusätzlicher Reflektor verwendet werden, der an die Meßkante angelegt wird. Dabei weist das Gerät eine Steuer- und Rechenvorrichtung auf, mittels der über äußere Druckknöpfe die Berechnung der Aufmaße von rechteckigen Flächen und quaderförmigen Rauminhalten vorgenommen werden kann.

Nachteilig bei der bekannten Vorrichtung ist deren geringe Flexibilität gegenüber anderen Raumformen als der quaderförmigen, sowie die nicht vorhandene Datenausgabe. Ferner ist die Ermittlung der Aufmaße komplexer Raumformen schwierig und nur für den geübten Benutzer möglich. Mit anderen Worten, das Gerät ist für den täglichen Einsatz auf Baustellen aufgrund der unübersichtlichen und ungestützten Handhabung, d.h. mangelnder Benutzerfreundlichkeit, nur bedingt einsetzbar. Ferner bringt es die Technik des Phasenvergleichs mit sich, daß kleine Abstände etwa bis zu 18 cm nicht gemessen werden können. Beim Vermessen von Leibungen, Nischen und dergleichen muß deshalb wieder zum Meßstock gegriffen werden.

Weiter sind Geräte auf der Basis von Theodoliten bekannt, bei denen die Entfernungsmessungen mittels eines Theodoliten durchgeführt werden, nachdem dieser in den Nullpunkt eines entsprechend definierten Koordinatensystems einjustiert wurde. Das bekannte Gerät, das ebenfalls von der Firma Leica unter der Bezeichnung TPS-System 100 vertrieben wird, weist eine Meßwertanzeige auf, von der die ermittelten Meßwerte entweder abgeschrieben oder über einen entsprechenden Geräte-Datenstecker zu einer Auswertereinheit, d.h. einem Rechner, gesendet werden können. Für die Auswertung der gemessenen Daten steht eine entsprechende Softwarebibliothek zur Verfügung.

Die Erfassung der Meßwerte durch Ablesen der Meßwertanzeige erweist sich jedoch als aufwendig und fehleranfällig, desgleichen gibt es im einfachen, rauhen Handwerkerbetrieb Probleme hinsichtlich der Differenziertheit der Bedienung sowohl bezüglich der Grundjustierung des Geräts als auch der nach folgenden empfindlichen Messungen und der Bedienung der Softwarebibliothek.

Aus Düllo, B.: Optischer Distanzsensor auf Basis der Lichtlaufzeitmessung; "m&p", September 1991, S. 398-340; ist ein reines Distanzmeßgerät bekannt, bei dem die Lichtlaufzeit zwischen Sensor und Meßobjekt in eine Abstandsinformation umgesetzt wird. Dabei wird der gesendete Laserstrahl einer sinusförmigen Amplitudenmodulation unterzogen und aus der Phasenlage zwischen reflektiertem Licht und der Referenzphase kann der Abstand bestimmt werden.

DE-OS 40 32 657 betrifft ein Verfahren zur Positionsbestimmung opto-elektronisch darstellbarer Raumpunkte über die Bestimmung der Winkelwerte des Raumpunkts sowie seiner Entfernung vom Meßsensor, wobei für die Winkelmessung vorzugsweise ein Theodolit und für die Entfernungsmessung ein Laserabstandsmeßgerät verwendet wird. Das Verfahren ist zum Einsatz auf einer Baustelle nicht geeignet.

Der Erfindung liegt daher die Aufgabe zugrunde, eine Vorrichtung und ein Verfahren zu schaffen, womit Aufmaße von Räumen und Gebäuden einfach erstellt werden können.

Die Aufgabe wird durch den Gegenstand der Ansprüche 1, 2 und 8 gelöst. Bevorzugte Ausführungsformen der Erfindung sind Gegenstand der Unteransprüche.

Die erfindungsgemäße Vorrichtung umfaßt also, nebst anderen Elementen, einen Speicher zum Speichern einer Vielzahl geometrischer Grundformen und ein Anzeigemittel zur Anzeige und Auswahl der zu messenden geometrischen Grundform aus der Vielzahl vorgegebener geometrischer Grundformen. Unter geometrischen Grundformen werden Dreiecke, Quader, Vielecke, Trapeze, Rundsäulen, Halbrundsäulen, Kreise, Kreisabschnitte, Ellipsensäulen etc. verstanden. Mit anderen Worten, geometrische Grundelemente sind die ein-, zwei- oder dreidimensionalen Grundformen, aus denen sich Räume mit Türen, Fenstern etc. und Gebäude zusammensetzen lassen. Eindimensionale Größen sind beispielsweise Längen und Umfänge.

Die Vorrichtung gibt die Reihenfolge der Messungen entsprechend der ausgewählten geometrischen Grundform vor, wobei vorzugsweise die Reihenfolge der Messungen an die Gewohnheiten des Benutzers angepaßt werden kann. Der Benutzer teilt dem Resultat der Messung der einzelnen Grundform ein Vorzeichen, also + oder -, zu. Aus den Resultaten der geometrischen Grundformen, die in der Vorrichtung gespeichert sind, können die ausgewählten geometrischen Grundformen vom Rechner zu einer Raumform verknüpft werden, um ein entsprechendes Aufmaß der Raumform zu ermitteln.

Im Abstandsmeßgerät der Vorrichtung ist eine Schnittstelle definiert, die als Geräte - Datenstecker ausgelegt sein kann, an der Signale zur Übermittlung an den Rechner anliegen, die den gemessenen Wert, dessen Vorzeichen und einen Löschcode angeben, wobei das Gerät Betätigungsschalter für die Funktionen: Signale mit positivem Vorzeichen bereitstellen, Signale mit negativem Vorzeichen bereitstellen, Wert- und Vorzeichensignale am Datenstecker abgeben, Löschcode-Signal am Datenstecker abgeben, aufweist; außerdem kann es über wenigstens einen in der Abgaberichtung des Meßstrahls um wenigstens einen definierten Wert vorschiebbaren Meßspatel verfügen. Für dieses Merkmal des Meßspatels wird auch separater Schutz beansprucht.

Die Meßwerte - ob zusätzlich am Abstandsmeßgerät angezeigt oder nicht - werden auf die Betätigung des Datenabgabe-Betätigungsschalters hin über den Geräte-Datenstecker bzw. die Schnittstelle unmittelbar einem EDV-Gerät übergeben, das mit Hilfe eines Programms, nach vorheriger Festlegung der Reihenfolge der Meßwerte, diese passend miteinander verknüpft und die erforderlichen Berechnungen anstellt. Die Meßwerte und die Rechenergebnisse, d.h. Aufmaße und Kalkulationen, können dann einem Drucker übergeben werden. Die Bedienung ist mit Hilfe einer beschränkten Anzahl von Druckknopfschaltern am Abstandsmeßgerät sehr einfach und jedermann zumutbar, die Meßwerte werden nur gezielt auf entsprechenden Befehl hin unter vorgewähltem Vorzeichen an den Rechner als Auswertgerät übertragen und im Falle einer Fehlbetätigung kann durch Abgeben des Löschcode-Signals, was durch Drücken einer Löschtaste möglich ist, zumindest das letzte übertragene Signal, je nach Programmierung auch eine Folge der letztübertragenen Signale, im Rechner wieder gelöscht werden.

Vorzugsweise ist durch einen einzigen weiteren Betätigungsschalter eine Beleuchtung für die Meßwertanzeige, sofern diese vorhanden ist, in einfacher Weise ein- und ausschaltbar.

In einer bevorzugten Ausführungsform sind im Abstandsmeßgerät selbst ein Prozessor mit Speicher zur Speicherung des Programms der Reihenfolge der Meßwerte, der ermittelten Meßwerte und des Programms zur Verknüpfung der Meßwerte enthalten. Die einstückige Vorrichtung hat hierbei zweckmäßigerweise einen Datenstecker zum unmittelbaren Anschluß eines Druckers. Die Auswertung über einen externen Rechner ist dann nicht mehr erforderlich.

In einer weiteren bevorzugten Ausführungsform sind das Abstandsmeßgerät und der Rechner voneinander getrennt und durch eine Datenübertragungsstrecke miteinander verbunden. Die Art der Verbindung kann seriell oder parallel sein, wobei die Übertragungsstrecke drahtgebunden oder drahtlos sein kann. Eine drahtlose Übertragung kann auf einer Funk-, Ultraschall- oder optischen Übertragung basieren. Als Rechner kommen insbesondere transportable PCs wie Notebooks oder PDAs in Betracht. Ferner können transportable PCs mit einer berührungsempfindlichen Anzeige, sog. Penpads, verwendet werden.

Der Meßspatel, oder vorzugsweise zwei parallele Meßspatel, dient dazu, in einem definierten Abstand von der Meßebene des Abstandsmeßgeräts eine Bezugsebene aufzubauen, wobei dann durch Subtraktion des Abstands zwischen diesen beiden Ebenen vom ermittelten Meßwert unter Messung eines über dem Minimum liegenden Meßwerts doch sehr kleine Abstände, nämlich von der Bezugsebene weg, erfaßt werden können. Die Subtraktion dieses Abstands zwischen den Ebenen erfolgt zweckmäßigerweise automatisch, indem mit Hilfe eines Tastschalters der Ausfahrzustand des Meßspatels oder der Meßspatel abgegriffen und automatisch berücksichtigt wird. Es ist grundsätzlich möglich, mehrere Ausfahrweiten vorzusehen, generell dürfte es jedoch genügen, eine einzige Ausfahrweite vorzusehen.

Das erfindungsgemäße Verfahren ist in Anspruch 8 gekennzeichnet.

Das Verfahren bzw. Programm entspricht dem handwerklichen Arbeiten am besten, d.h. die Art, wie der tätige Handwerker dieses Programm zu bedienen hat, entspricht der herkömmlichen handwerklichen Arbeitsweise. Er wird bei der Festlegung der Maßaufnahme dadurch unterstützt, daß er nicht dazu gezwungen ist, wie beim Stand der Technik die mathematischen Formeln für seine Berechnungen zu wissen, sondern er wählt anhand einer grafischen Darstellung des Körpers oder der Fläche aus, was er zu vermessen hat, und das Programm wandelt dann diese graphische Auswahl der Form in eine mathematische Formel um, die dann in der späteren Verarbeitung auch verwendet wird.

Dem ausgeschickten, die Messung ausführenden Handwerker wird das Gerät mit von einem Projekteur eingespeichertem Programm mitgegeben. Der Projekteur ist beispielsweise ein Meister, während der Ausführende eine ungelernte Kraft sein kann. Der die Messungen Ausführende bewegt sich dann auch im Programm von Raum zu Raum und weist dort jedem Raum die jeweiligen dort zu verwendenden Materialien zu. Während nämlich üblicherweise zuerst das Material zugewiesen wird und dann angegeben wird, in welchem Raum es sein soll - was aber nicht der üblichen handwerklichen Vorgehensweise entspricht -, wird beim erfindungsgemäßen Verfahren vorzugsweise, wie an sich schon bekannt, zuerst der jeweilige Raum eingegeben, für den die zutreffenden Materialien gespeichert vorgegeben sind. Beispielsweise habe ein Raum einen rechteckigen Grundriß, zu dem noch kleinere Flächen wie eine Türleibung und eine Heizkörpernische kommen und von dem eine halbrunde Fläche, die dem offenen Kamin entspricht, abzuziehen ist. Die einzelnen Flächen werden dem ausführenden Handwerker am Bildschirm grafisch dargestellt, er wählt sie durch eine Bestätigung aus und übernimmt dadurch die treffende Formel. Die Formeln werden also anhand der grafischen Darstellungen gewählt, die auf dem Bildschirm des angeschlossenen Rechners oder Notebooks oder der Vorrichtung selbst erscheinen. Die grafischen Darstellungen entsprechen geometrischen Elementarfiguren oder Grundformen, für die Formeln gespeichert sind und die den Gesamtgrundriß, die resultierende Wandfläche oder die Raumform zusammensetzen.

Weitere Einzelheiten, Vorteile und Weiterbildungen der Erfindung ergeben sich aus der folgenden Beschreibung bevorzugter Ausführungsbeispiele unter Bezugnahme auf die Zeichnung.
- Fig. 1: zeigt eine erfindungsgemäße Vorrichtung mit einem Abstandsmeßgerät und einem separaten Rechner sowie einem Drucker.
- Fig. 2: zeigt ein Ablaufdiagramm des von der Bedienungsperson durchzuführenden Verfahrens.

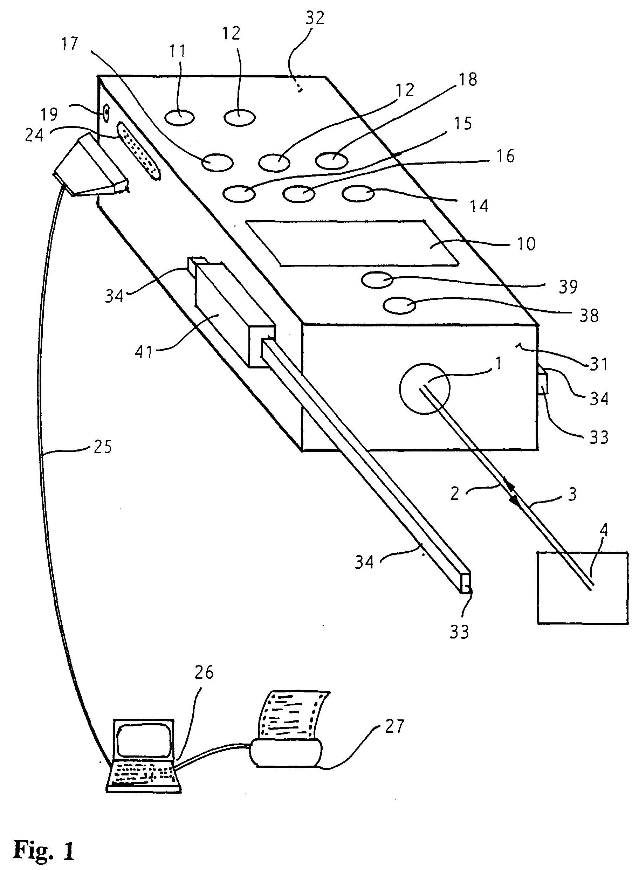

Das Abstandsmeßgerät der Fig. 1 weist ein etwa quaderförmiges Gehäuse und in diesem, hinter einer Fensteröffnung 1, einen Sender und einen Empfänger für Infrarotlicht auf, die in der Zeichnung nicht sichtbar sind. Der Sender umfaßt einen Laser. Er sendet einen Meßstrahl 2 in Richtung auf eine Fläche, deren Abstand vom Gerät gemessen werden soll, und empfängt einen reflektierten Strahl 3 vom Reflexionsort 4. Eine in der Zeichnung nicht sichtbare, im Gerät enthaltene Auswerteinrichtung ermittelt durch Vergleich der Phasen der Strahlen 2 und 3 in bekannter Weise den Abstand zum Reflexionsort 4. Anstelle einer Phasenauswertung sind auch andere physikalische Größen auswertbar, beispielsweise gibt es auch Abstandsmeßgeräte, die auf der Basis der Lichtimpuls-Laufdauer operieren.

An der Oberseite des Gehäuses des Abstandsmeßgeräts befinden sich ein Monitor mit einer Meßwertanzeige 10 sowie eine Anzahl von Druckknopfschaltern 11 bis 17, die folgende Bedeutung haben: Mit dem Druckknopfschalter 11 wird das Gerät eingeschaltet und mit dem Druckknopfschalter 12 ausgeschaltet. Der Druckknopfschalter 13 dient dem Einschalten und Ausschalten einer Beleuchtung an der Meßwertanzeige 10. Der Druckknopfschalter 14 stellt eine Löschtaste dar, die einen später beschriebenen Löschimpuls auslöst. Mit Hilfe der Druckknopfschalter 15 und 16 kann der Meßwert für die weitere Verarbeitung mit einem Vorzeichen versehen werden, nämlich Plus bzw. Minus. Durch Druck auf den Druckknopfschalter 17, wird eine Datenausgabe bewirkt. Ein Druckknopfschalter 18 steuert die Speicherung des ermittelten Meßwerts im Gerät. Die elektrische Leistung wird aus einer im Gerät eingebauten Batterie bezogen, um den Betrieb des Geräts auch an Baustellen und dergleichen zu ermöglichen, sie kann jedoch auch über ein Netzgerät über eine Buchse 19 eingespeist werden. Alternativ kann die Buchse 19 auch nur eine Batterieladebuchse sein.

Die Datenausgabe erfolgt über einen als Schnittstelle wirkenden Datenstecker 24. Am Datenstecker 24 werden folgende Größen codiert abgegeben: Der gemessene Wert, ein Vorzeichenbit für den gemessenen Wert, ein Löschcode und zwecks sicherer Anpassung eines über ein Kabel 25 oder alternativ auch über Funk anschließbaren Rechners 26 eine Programm- oder Programmversions-Kennzahl. Über das Kabel 25 kann das Gerät bei entsprechender Ausführung auch vom Rechner 26 aus mit elektrischem Strom versorgt werden.

An den Rechner 26 ist seinerseits ein Drucker 27 angeschlossen.

In den Rechner ist ein Programm geladen, das die Meßwerte, die über das Kabel 25 einlaufen, decodiert und sie an den Drucker 27 weitergibt. Gemäß dem Programm kann der Rechner die Daten miteinander verknüpfen, beispielsweise Flächen oder Volumina durch Multiplikationen und Additionen/Subtraktionen berechnen, wozu das Vorzeichenbit erforderlich ist. Dem Handwerker ist die Reihenfolge der Messungen vorgegeben, bei deren Einhaltung der Rechner 26 die geforderten Ergebnisse automatisch ausgibt. Eine Fehlmessung, beispielsweise aufgrund eines versehentlichen Drucks zur Unzeit auf den Druckknopfschalter 17, kann durch Betätigung des Druckknopfschalters 14 rückgängig gemacht werden, bei dessen Niederdrücken ein Löschcode-Signal an den Rechner 26 geht, um den letzten eingespeicherten Wert wieder zu löschen. Bei entsprechender Programmierung läßt sich unter Umständen auch durch weitere Betätigungen des Druckknopfschalters 14 der vorletzte, vorvorletzte usw. eingegebene Meßwert löschen. Da hierdurch jedoch eine zusätzliche Verwirrungsquelle geschaffen wird, ist dies beim beschriebenen Beispiel nicht vorgesehen.

Primär mißt die Auswerteinrichtung im Gerät stets den Abstand des Senders bzw. Empfängers vom Reflexionsort 4. Das Gerät ist jedoch so eingerichtet, daß es drei Bezugsebenen aufweist, von denen aus der Abstand zum Zweck einer Längenmessung ermittelt wird, nämlich als erste Bezugsebene die Vorderfläche 31 des Geräts, als zweite Bezugsebene die Hinterfläche 32 des Geräts und als dritte Bezugsfläche die Stirnflächen 33 von zwei gemeinsam ausfahrbaren Meßspateln 34. Nach Wahl der Bezugsebene berücksichtigt die Auswerteeinrichtung diese Wahl durch Addition bzw. Subtraktion von festen Korrekturwerten. Der Eingabe der Wahl der Vorderfläche 31 bzw. der Hinterfläche 32 dienen in üblicher Weise Druckknopfschalter 38 bzw. 39.

Das Gerät kann aufgrund seiner physikalischen Wirkungsweise nur Abstände über 18 cm messen. Sind kleinere Abstände zu messen, so muß die Bezugsebene um 18 cm vorverlegt werden. Hierzu dienen die Meßspatel 34, die in Führungen 41 beiderseits am Gerätegehäuse befestigt sind und einerseits bis an die oder hinter die Vorderfläche 31 zurückziehbar sind oder, zum Einnehmen einer anderen stabilen Endstellung, um eine genau vorgegebene Weite ausfahrbar sind. Die ausgefahrene Position der Meßspatel 34 wird automatisch durch in den Führungen 41 oder in der Gehäusewand vorhandene Tastschalter, beispielsweise berührungslose sogenannte "Reedschalter", festgestellt und der Auswerteinrichtung eingegeben. In der Zeichnung ist einer der Meßspatel in der ausgefahrenen und der andere in der eingezogenen Stellung dargestellt. Im tatsächlichen Betrieb müssen natürlich beide Meßspatel die gleiche Position einnehmen. Die Stirnflächen 33 der Spatel 34 können in deren ausgefahrenem Zustand als Anlegeflächen verwendet werden.

Gemäß einer nicht dargestellten Weiterentwicklung der Vorrichtung sind im Abstandsmeßgerät selbst ein Prozessor und ein Speicher eingebaut, die eine Datenverarbeitung in der besprochenen Weise durchführen, so daß das Gerät ein sogenanntes "Notebook" enthält. Der Drucker 27 ist dann unmittelbar an das Gerät anzuschließen oder kann, wenn es sich um einen kleinen, einfachen Drucker handelt, sogar in das Abstandsmeßgerät integriert sein.

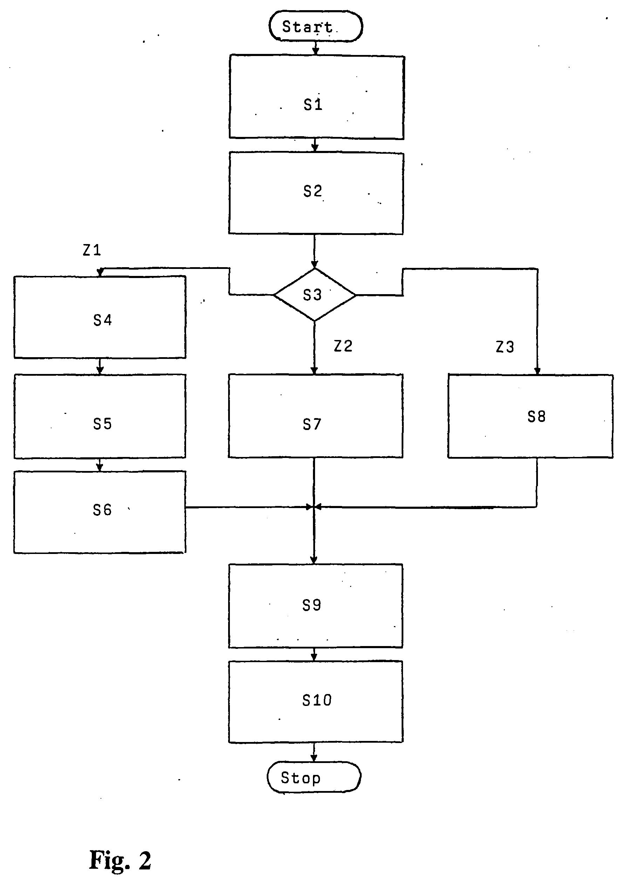

Figur 2 zeigt ein Ablaufdiagramm des von der Bedienungsperson durchzuführenden Verfahrens, wobei hier von einer zweiteiligen Version der Vorrichtung ausgegangen wird. Das Verfahren kann jedoch mit minimalen Änderungen in der einteiligen Version der Vorrichtung eingesetzt werden. Als Rechner wird hier ein sog. Penpad verwendet, d.h. ein tragbarer PC, dessen Display berührungsempfindlich ist, so daß Eingaben mittels eines Stiftes über das berührungsempfindliche Display vorgenommen werden können.

Im ersten Schritt S1 wird die Funktionsfähigkeit der Vorrichtung hergestellt, d.h. das Abstandsmeßgerät und der Rechner werden miteinander verbunden und eingeschaltet.

Im Schritt S2 wird auf dem Rechner das Programm zur Erfassung und Weiterverarbeitung von Aufmaßen gestartet.

Es erfolgt im Schritt S3 eine Auswahl aus drei Möglichkeiten.

Es wird entweder im Zweig Z1 ein neues Projekt angelegt, wobei unter Projekt hier ein Auftrag oder Bauvorhaben verstanden wird, d.h. beispielsweise Aufmaße eines bestimmten Gebäudes zu erstellen. Bei einer Neuanlage eines Projekts im Schritt S4 müssen sog. Kopfdaten eingegeben werden, d.h. beispielsweise Lage und Adresse des Gebäudes (der Gebäude), Eigentümer, Auftraggeber etc.

Im Schritt S5 des Zweigs Neuanlage Z1 werden die Gebäude E (falls mehrere) und die entsprechenden Räume angelegt.

Im Schritt S6 werden die Materialien der einzelnen Räume festgelegt, beispielsweise Wandfarbe, Deckenfarbe, Kacheln, Putz, Bodenmaterial wie Teppichboden, Parkett, etc.

Damit ist der Zweig Neuanlage Z1 abgearbeitet. Es ist jedoch auch möglich, die Reihenfolge der Schritte S6 und S5 zu vertauschen, so daß die Räume den Materialien zugeordnet sind.

Die zweite Möglichkeit des Auswahlschrittes S3 wird durch den Zweig Z2 gebildet, in dem im Schritt S7 ein bereits vorhandenes Projekt geladen wird.

Die dritte Möglichkeit des Schrittes S3 besteht im Laden eines Projekts von einem anderen PC oder einer Diskette im Schritt S8 des Zweigs Z3.

Danach werden im Schritt S9 die Materialien mit dem Programm nach dem erfindungsgemäßen Verfahren einem definierten Raum aufgemessen. Es wird auf der Anzeige bzw. dem Display eine Auswahl der geometrischen Grundformen aufgelistet. Aus dieser Auswahl wird die entsprechende Grundform, beispielsweise Rechteck mit Kreisbogen für die Fläche einer Tür mit oben angesetztem Bogen, ausgewählt. Diese Grundform erhält eine Positionsnummer. Die ausgewählte geometrische Grundform wird auf dem Display angezeigt, wobei die Anzeige bei dreidimensionalen Grundformen vorzugsweise perspektivisch erfolgt. Die zu messenden Variablen, beispielsweise A, B, etc., werden in der Darstellung der Grundform angezeigt, wobei sich die Reihenfolge des Messens aus der Darstellung ergibt. D.h. es muß zuerst die Größe A, dann die Größe B usw. gemessen werden. Die Reihenfolge der Messung kann vorab durch Eingriffe in die Routinen der geometrischen Grundformen geändert und an die Gewohnheiten des Benutzers angepaßt werden. Das Aufmaß des gesamten, im Moment bearbeiteten Raums ergibt sich dann aus der entsprechenden Verknüpfung der Aufmaße der geometrischen Grundformen. Es ist auch möglich, zuerst die Raumform aus den einzelnen geometrischen Grundformen aufzubauen und danach die Messung der einzelnen Grundformen durchzuführen. Diese beiden Varianten werden je nach Gewohnheit des Benutzers eingesetzt.

Sind die gewünschten Aufmaße des derzeit betrachteten Raumes ermittelt, so werden diese gespeichert, oder, falls nur dieser Raum aufgemessen werden sollte, ausgegeben. Ist ein Aufmaß mehrerer Räume hinsichtlich eines Materials oder mehrerer Materialien zu erstellen, so wird der nächste Raum aufgerufen und dessen Aufmaße werden wie oben bestimmt. Die Aufmaße einer Vielzahl von Räumen bzw. eines Gebäudes können dann aus den Aufmaßen der einzelnen Räume bestimmt werden. Analoges gilt für ein Projekt bestehend aus mehreren Gebäuden.

Im Schritt S10 werden dann die ermittelten Aufmaße des Raumes, der Räume, des Gebäudes oder der Gebäude ausgegeben, wobei die ausgegebenen Listen einem festgelegten Standard entsprechen, d.h. es wird die notwendige Berechnungsformel des ausgegebenen Aufmaßes mit ausgegeben. Ferner können gleichzeitig der Positionspreis bzw. die Preise der Aufmaße eines Materials zu entsprechenden geometrischen Grundformen in einem bestimmten Raum und dessen Summe ausgegeben werden. Die Form der Ausgabe des Aufmaßberichts, eines Angebots oder einer entsprechenden Rechnung richtet sich nach den Gepflogenheiten des Benutzers bzw. nach entsprechenden Notwendigkeiten (gesetzliche Vorschriften).

## Patentansprüche

1. Vorrichtung zur Bestimmung und Weiterverarbeitung von Aufmaßen mit einem elektronischen Abstandsmeßgerät auf der Basis einer Messung mit Hilfe eines optischen Meßstrahls, mit einem Sender für den Meßstrahl (2) und einem Empfänger für einen zurückkehrenden reflektierten Strahl (3) sowie einer Auswerteinrichtung zur Ermittlung des Abstands zum Reflexionsort (4) aus einem Vergleich physikalischer Größen des gesendeten Meßstrahls und des empfangenen Strahls, mit einem Geräte-Datenstecker (24) am Abstandsmeßgerät, dadurch gekennzeichnet, daß am Geräte-Datenstecker (24) Signale zur Übermittlung an einen Rechner (26) anliegen, die den gemessenen Wert, dessen Vorzeichen und einen Löschcode angeben, und daß das Gerät Betätigungsschalter (15, 16, 17, 14) für die Funktionen: Signale mit positivem Vorzeichen bereitstellen, Signale mit negativem Vorzeichen bereitstellen, Wert- und Vorzeichensignale am Datenstecker abgeben, Löschcode-Signal am Datenstecker abgeben, aufweist.

2. Vorrichtung zur Bestimmung und Weiterverarbeitung von Aufmaßen mit einem elektronischen Abstandsmeßgerät auf der Basis einer Messung mit Hilfe eines optischen Meßstrahls, mit einem Sender für den Meßstrahl (2) und einem Empfänger für einen zurückkehrenden reflektierten Strahl (3) sowie einer Auswerteinrichtung zur Ermittlung des Abstands zum Reflexionsort (4) aus einem Vergleich physikalischer Größen des gesendeten Meßstrahls und des empfangenen Strahls, und einem Rechner (26) zum Steuern der Messung und zum Erfassen und Weiterverarbeiten der Meßwerte,
dadurch gekennzeichnet, daß
die Vorrichtung einen Speicher zum Speichern einer Vielzahl geometrischer Grundformen und diesen Grundformen zugeordneter geometrischer Formeln aufweist,
die Vorrichtung ein Anzeigemittel zur Anzeige und Auswahl der zu messenden geometrischen Grundformen aus der Vielzahl von vorgegebenen geometrischen Grundformen aufweist;
die in den Rechner einlaufenden Abstandsmeßwerte entsprechend ihrer Eingangs-Reihenfolge in die jeweilige Formel der ausgewählten geometrischen Grundform eingesetzt werden,
der Rechner (26) entsprechend der Formel der ausgewählten geometrischen Grundform die Abstandsmeßwerte miteinander zu einem Aufmaß verknüpft, und
die ermittelten Meßwerte und das errechnete Aufmaß auf dem Anzeigemittel ausgibt.

3. Vorrichtung nach Anspruch 2, dadurch gekennzeichnet, daß der Rechner (26) dazu ausgerüstet ist, mehrere ausgewählte geometrische Grundformen zu einer Raumform zu verknüpfen, um ein entsprechendes Aufmaß der Raumform zu ermitteln.

4. Vorrichtung nach Anspruch 2 oder 3, dadurch gekennzeichnet, daß die Vorrichtung ein Mittel aufweist, mit dem die Reihenfolge der Messungen entsprechend der mindestens einen geometrischen Grundform festgelegt wird.

5. Vorrichtung nach einem der Ansprüche 2 bis 4, dadurch gekennzeichnet, daß das Abstandsmeßgerät eine Schnittstelle (24) aufweist, an der Signale zur Übermittlung an den Rechner (26) anliegen, die den gemessenen Wert, dessen Vorzeichen und einen Löschcode angeben, und daß das Gerät Betätigungsschalter (15, 16, 17, 14) für die Funktionen: Signale mit positivem Vorzeichen bereitstellen, Signale mit negativem Vorzeichen bereitstellen, Wert- und Vorzeichensignale am Datenstecker abgeben, Löschcode-Signal an der Datenschnittstelle abgeben, aufweist.

6. Vorrichtung nach einem der vorangegangenem Ansprüche, dadurch gekennzeichnet, daß an der Schnittstelle (24) oder an einer weiteren Geräte-Schnittstelle auch Signale zur Übermittlung an einen Drucker für das Drucken der ermittelten Meßwerte anliegen.

7. Vorrichtung nach einem der vorangegangenen Ansprüche, dadurch gekennzeichnet, daß sie über wenigstens einen in der Abgaberichtung des Meßstrahls (2) um wenigstens einen definierten Wert vorschiebbaren Meßspatel (34) verfügt.

8. Vorrichtung nach Anspruch 7, dadurch gekennzeichnet, daß das Abstandsmeßgerät ein quaderförmiges Gehäuse mit an einer der Quaderflächen (31) aktivem Sender und Empfänger aufweist und daß an zwei sich gegenüberliegenden, der Quaderfläche (31) mit dem Sender und Empfänger benachbarten Quaderflächen je einer der Meßspatel (34) vor- und zurückschiebbar befestigt ist.

9. Verfahren zum Erfassen und Bearbeiten von Aufmaßen, dadurch gekennzeichnet, daß das Verfahren die folgenden Schritte umfaßt:
a) Auswählen einer geometrischen Grundform aus einem gespeicherten Vorrat von vorgegebenen geometrischen Grundformen,
b) Darstellen der ausgewählten geometrischen Grundform auf einer Anzeige Vorrichtung,
c) Ermitteln der notwendigen Raummaße auf der Basis von Abstandsmessungen mittels eines optischen Meßstrahls, wobei die Reihenfolge der Abstandsmessungen von der definierten geometrischen Grundform vorgegeben wird und eine Bewertung der ermittelten Meßwerte hinsichtlich Gültigkeit und/oder eine Änderung des Vorzeichens vorgenommen wird,
d) Verknüpfen der in c) ermittelten Meßwerte entsprechend der Vorgabe dar geometrischen Grundform in a) zum Berechnen des entsprechenden Aufmaßes,
e) Speichern und Ausgeben des Meßwerte und des Aufmaßes.

10. Verfahren nach Anspruch 9, dadurch gekennzeichnet, daß mehrere geometrische Grundformen zu einer Raumform verknüpft werden und das Verfahren das Aufmaß der Raumform aus den ermittelten Meßwerten und Aufmaßen der geometrischen Grundformen bestimmt.

11. Verfahren nach Anspruch 9 oder 10, dadurch gekennzeichnet, daß die Raumform graphisch dargestellt wird.

12. Verfahren nach Anspruch 10 oder 11, dadurch gekennzeichnet, daß die Reihenfolge der Messungen der Abstände zur Bestimmung der Raumform aus der definierten Raumform abgeleitet wird.
